# EUROPEAN PATENT SPECIFICATION

(11) **EP 0 354 673 B1**
(45) Date of publication and mention of the grant of the patent: **24.02.1993**
(21) Application number: 89307328.8
(22) Date of filing: 19.07.1989
(51) Int. Cl.: G01M 3/04

(54) **A solvent detecting sensor**
Sensor für einen Solventdetektor
Capteur pour un détecteur de solvent

(30) Priority: 11.08.1988 JP 105379/88
(43) Date of publication of application: 14.02.1990
(73) Proprietor: JUNKOSHA CO. LTD., Setagaya-ku Tokyo 156 (JP)
(72) Inventor: Akiba, Juji, Iruma-gun Saitama (JP)
(74) Representative: Klunker . Schmitt-Nilson . Hirsch

(56) References cited:
- CA-A- 978 614
- DE-A- 3 535 918
- DE-U- 8 427 528
- FR-A- 2 204 304
- US-A- 4 631 952

## Description

The present invention relates to a solvent detecting sensor suitable for use in detecting leakage of a specific solvent or group of solvents.

Water detecting sensors are the most widely known type of solvent detecting sensor, and a structure which is commonly used in such sensors is one in which a pair of conductors, forming part of a detection circuit, are installed on an insulating substrate so that the conductors are exposed and are separated from each other. In water detecting sensors comprising a structure of this type, an electrical change occurs in the detection circuit when the pair of conductors are short- circuited by water, and water leakage can thus be detected by detecting this electrical change.

From the prior art document DE-A-3 535 918 a sensor for leakage detection purposes is known, comprising a coaxial cable and an uncovered cable disposed parallel to each other. Both cables are located within insulating envelopes which are apertured so that the uncovered cable and an outer conductor of the coaxial cable are partially exposed to the surrounding atmosphere.

The center conductor of the coaxial cable is used to detect any conductive leaking fluid such as water, and the localization thereof by means of resistance measuring.

However, there are cases where it is desired to detect other solvents such as methyl ethyl ketone (hereinafter referred to as MEK), exclusively. Accordingly, water detecting sensors such as described above have been used in order to detect such other solvents, but since most of these solvents generally have a lower electrical conductivity than water, the water sensors must be modified so that their sensitivity is increased. In this case the sensor is still basically a water detecting sensor, and when it is used for detecting another solvent, e.g., in cases where the sensor is used to monitor solvent leakage in a chemical plant or the like, the pair of conductors in the sensor may be short-circuited, even if there is no solvent leakage, as a result of being wetted by rain or other water. Thus, accurate monitoring of solvent leakage cannot be guaranteed using such a sensor.

Furthermore, there are limits as to how far the sensitivity of the water detecting sensors can be increased, and it is difficult to achieve a detection sensitivity which is sufficient for a reliable solvent detecting sensor.

The patent document CA-A-978 614 shows a leak detection cable utilizing a pair or helically twisted metallic electrical conductors, each conductor being encased in an insulating layer of a styrene-butadiene block copolymer. Both insulating layers can be covered with a thin layer of paraffin wax preventing OZONE deterioration of the insulating layers. This known cable can be used for the detection of leaks of petroleum products and like fluids from pipers or reservoirs.

The prior art document FR-A-2 204 304 describes a further construction of a probe for exclusively detecting organic liquids, e.g. mineral oils, hydrocarbons etc., the probe comprising a water-repellent surface coverage favoring the accumulation of organic liquids. Such a coverage consists of PTFE, e.g.

The present invention aims to avoid the problems encountered with the known devices, and to provide a solvent detecting sensor which is able to detect solvents as its primary detection target and which has good detection sensitivity.

To this end, according to the invention there is provided a solvent detecting sensor comprising first and second electrical conductors installed on an electrically insulating substrate, the conductors being separated from each other and forming a detection circuit network, a masking layer covering the first and second conductors on the substrate, the masking layer being of an electrically insulating material which is both water-repellent and capable of being dissolved by the solvent to be detected, and a porous surface layer of an electrically conductive material on the masking layer.

The masking layer material will obviously depend on the particular solvent to be detected, but for MEK and similar solvents it is preferably polyvinylchloride or a paraffin-type paint.

The surface layer provided on the masking layer is preferably conductive carbon powder.

Because the masking layer is water-repellent rather than hydrophilic, contact of the sensor with water will not short-circuit the first and second conductors, and the sensor will not therefore sense the presence of water alone. On the other hand, when the masking layer is contacted by the solvent that is to be detected, the masking layer dissolves so that the first and second conductors are exposed. As a result, the first and second conductors are short-circuited by the solvent, or by the solvent and water in cases where the solvent is mixed with water, and the conductive substance which formed the surface layer on the masking layer mixes with the liquid in the short-circuited area to create an environment which facilitates the passage of electric current. An electrical change thus occurs in the detection circuit, and the presence of the solvent can be detected by means of this electrical change.

The solvent is thus selectively detected as the primary target of detection, with water being secondarily detected, and the detection sensitivity of the device as a solvent detecting sensor is sufficiently high.

One embodiment of a solvent detecting sensor in accordance with the present invention will now be described, by way of example only, with reference to the accompanying drawings, in which:
Figure 1 is a top plan view of the solvent detecting sensor 1, the sensor being designed for use in a case where the solvent to be detected is MEK; and
Figure 2 is a cross-section through the sensor on the line 2-2 in Figure 1.

The solvent detecting sensor 1 shown in the drawings comprises an insulating substrate 3, preferably of a glass-fibre-reinforced epoxy resin, having a first conductor 4 and a second conductor 5 pattern-etched on the upper surface 3a of the substrate 3 to form a detecting circuit network 2. The leading end 4a of the first conductor 4 is positioned at one end of the insulating substrate 3 as shown, and from there, the first conductor 4 extends linearly towards the other end of the substrate 3. At an intermediate point, the first conductor 4 splits into four spaced branches which extend parallel to each other, and the end of one of these branches forms the trailing end 4b of the first conductor 4 at the other end of the insulating substrate 3. Correspondingly, the leading end 5a of the second conductor 5 is positioned at the other end of the insulating substrate 3, and from there the second conductor 5 extends linearly towards the first end of the substrate 3. This second conductor 5 also splits at an intermediate point into four spaced branches which extend parallel to each other. The end of one of these branches forms the trailing end 5b of the second conductor 5 at the first end of the insulating substrate 3, and the other three branches of the second conductor 5 are positioned between the branches of the first conductor 4 so that the branches of the two conductors are interleaved and spaced from each other as shown. Accordingly, the first conductor 4 and the second conductor 5 are electrically insulated from each other on the surface 3a of the insulating substrate 3.

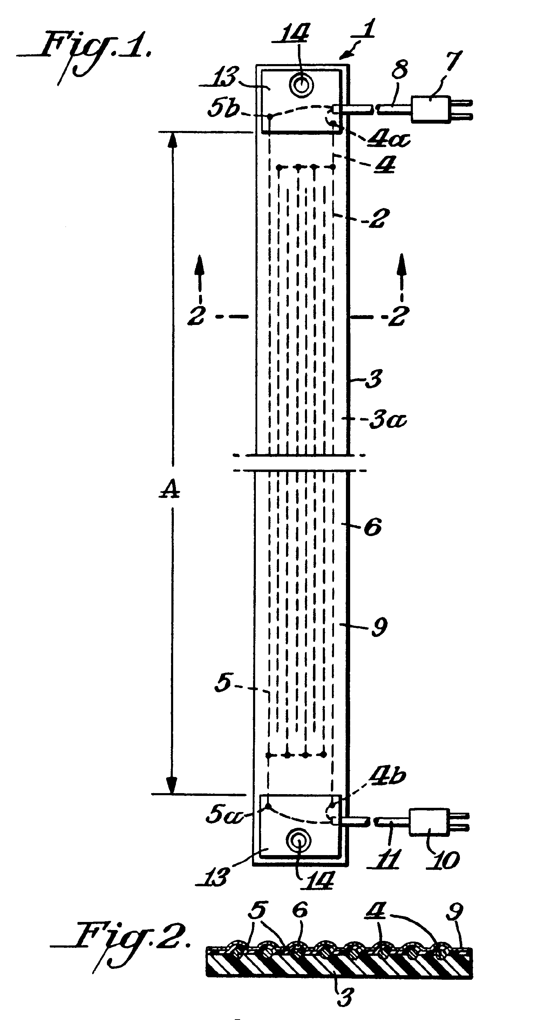

In the area indicated by the arrows marked "A" in Figure 1, the surface 3a of the insulating substrate 3 and the exposed portions of the first and second conductors 4 and 5 are covered by a masking layer 6 of a material which has electrically insulating and water-repellent properties, and which is dissolved by the target solvent MEK, a suitable material being polyvinylchloride (hereinafter referred to as PVC). A top layer 9 comprising electrically conductive powdered carbon is formed on the surface of the masking layer 6 by sprinkling the carbon powder over the PVC while it is in a tacky state. After hardening, the PVC retains the carbon powder as a porous conductive layer thereon.

The end of a cable 8 which extends from a connector 7 for connection to a detector (not shown) is positioned at the first end of the surface 3a of the insulating substrate 3. The tips of a pair of lead wires which extend from this cable 8 are electrically connected to the leading end 4a of the first conductor 4 and the trailing end 5b of the second conductor 5, respectively. Similarly, the end of a cable 11, which extends from a connector 10 for connection to a trailing-end resistor (not shown) is positioned at the other end of the surface 3a of the insulating substrate 3, and the tips of a pair of lead wires which extend from this cable 11 are electrically connected to the trailing end 4b of the first conductor 4 and the leading end 5a of the second conductor 5, respectively.

Thus, when the connector 7 is connected to a detector and the connector 10 is connected to a trailing-end resistor, a closed-loop detection circuit is formed.

Openings 14,14 provided for installation purposes pass through the insulating substrate 3 and mouldings 13,13 formed at opposite ends of the detection circuit network 2 on the substrate 3.

The function of the solvent detecting sensor 1 will now be described, using as an example a case where the sensor is installed in an outdoor location for the purpose of monitoring solvent leakage.

In cases where the solvent detecting sensor 1 is subjected to a liquid, such as rain water, which is inert with respect to the masking layer 6, the layer 6 does not dissolve. Because the layer 6 is water-repellent rather than hydrophilic, there is no short-circuiting of the first conductor 4 and the second conductor 5 in the detection circuit network 2. Accordingly, no electrical change occurs in the detection circuit.

However, when the sensor is attacked by the target solvent MEK, or by a liquid mixture of MEK and water, the MEK dissolves the masking layer 6 to expose the first conductor 4 and the second conductor 5. The two conductors 4,5 are thus short-circuited in the detection circuit network 2 by the MEK. At the same time, the powdered carbon of the top layer 9 released by the dissolving of the masking layer mixes with the MEK, or with the MEK and water, to further facilitate the passage of electric current in the short-circuited area. As a result, an electrical change occurs very quickly in the detection circuit, and the solvent leakage can be detected quickly by means of this electrical change.

Accordingly, by using the solvent detecting sensor 1, it is possible to detect MEK selectively as the primary target of detection, and to detect the presence of inert liquids such as water secondarily. Furthermore, because the detection sensitivity is extremely high, incidents of detection failure are unlikely.

The present invention is not limited to the construction of the above example. Various other configurations may be employed. For example, the material used for the masking layer 6 need not be PVC, a suitable alternative material being a paraffin-type paint. Furthermore, in cases where the solvent to be detected is a solvent other than MEK, an appropriate substance which is dissolved by the solvent in question will be selected for use in forming the masking layer 6.

The material of the top layer 9 is not limited to powdered carbon. This layer may also be formed from a salt such as sodium chloride, or other similar material.

The insulating substrate is not limited to a substrate made of a glass-fibre-reinforced epoxy resin, and the first and second conductors do not have to be formed by pattern-etching. Various design modifications are possible in this respect.

In addition, the possible uses of the solvent detecting sensor are not limited to leakage monitoring. The sensor can also be used for various other purposes.

## Claims

1. A solvent detecting sensor comprising first and second electrical conductors (4,5) installed on an electrically insulating substrate (3), the conductors being separated from each other and forming a detection circuit network (2), characterised by a masking layer (6) covering the first and second conductors (4,5) on the substrate (3), the masking layer (6) being of an electrically insulating material which is both water-repellent and capable of being dissolved by the solvent to be detected, and a porous surface layer (9) of an electrically conductive material on the masking layer (6).

2. A sensor according to claim 1, wherein the masking layer (6) is of polyvinylchloride.

3. A sensor according to claim 1, wherein the masking layer (6) is of a paraffin-type paint.

4. A sensor according to claim 1, wherein the surface layer (9) is of electrically conductive, carbon powder.

## Patentansprüche

1. Lösungsmittel-Detektorsensor, umfassend einen ersten und einen zweiten elektrischen Leiter (4, 5), die auf einem elektrisch isolierenden Substrat (3) angeordnet sind, wobei die Leiter voneinander beabstandet sind und ein Detektorschaltungsnetzwerk (2) bilden, **gekennzeichnet durch** eine Maskierschicht (6), welche den ersten und den zweiten Leiter (4, 5) auf dem Substrat (3) abdeckt, wobei die Maskierschicht (6) aus einem elektrisch isolierenden Material besteht, welches sowohl wasserabweisend ist als auch von dem festzustellenden Lösungsmittel gelöst werden kann, und eine poröse Oberflächenschicht (9) aus einem elektrisch leitenden Material auf der Maskierschicht (6).

2. Sensor nach Anspruch 1, bei dem die Maskierschicht (6) aus Polyvinylchlorid besteht.

3. Sensor nach Anspruch 1, bei dem die Maskierschicht (6) aus einem Paraffin-Anstrich besteht.

4. Sensor nach Anspruch 1, bei dem die Oberflächenschicht (9) aus elektrisch leitendem Kohlenstoffpulver besteht.

## Revendications

1. Capteur de détection de solvant comprenant des premier et second conducteurs électriques (4, 5) installés sur un substrat électriquement isolant (3), les conducteurs étant séparés l'un de l'autre et formant un réseau de circuit de détection (2), caractérisé par une couche de masquage (6) qui recouvre les premier et second conducteurs (4, 5) installés sur le substrat (3), la couche de masquage (6) étant réalisée en un matériau électriquement isolant qui à la fois est hydrophobe et peut être dissout par le solvant qui doit être détecté, et par une couche de surface poreuse (9) en un matériau électriquement conducteur installée sur la couche de masquage (6).

2. Capteur selon la revendication 1, dans lequel la couche de masquage (6) est en chlorure de polyvinyle.

3. Capteur selon la revendication 1, dans lequel la couche de masquage (6) est en une peinture du type paraffine.

4. Capteur selon la revendication 1, dans lequel la couche de surface (9) est en poudre de carbone électriquement conductrice.
